# FASCICULE DE BREVET EUROPEEN

(11) **EP 0 891 497 B1**
(45) Date de publication et mention de la délivrance du brevet: **19.12.2001**
(21) Numéro de dépôt: 98903108.3
(22) Date de dépôt: 23.01.1998
(51) Int. Cl.: F16D 13/75, F16D 13/38

(54) **EMBRAYAGE A PLATEAU DE PRESSION INTERMEDIAIRE AUQUEL EST ASSOCIE UN REGULATEUR DE COURSE**
KUPPLUNG MIT ZWISCHENLIEGENDER DRUCKPLATTE MIT ZUGEORDNETER HUBSTEUERUNG
CLUTCH WITH INTERMEDIATE PRESSURE PLATE WITH WHICH A STROKE CONTROL IS ASSOCIATED

(30) Priorité: 24.01.1997 FR 9700759
(43) Date de publication de la demande: 20.01.1999
(73) Titulaire: VALEO, 75017 Paris (FR)
(72) Inventeur: HAGNERE, Raymond, F-80080 Amiens (FR)
(74) Mandataire: Gamonal, Didier
(86) Numéro de dépôt international: FR9800117
(87) Numéro de publication internationale: WO9832986

(56) Documents cités:
- FR-A- 2 540 584
- US-A- 4 640 400
- US-A- 5 123 512

## Description

L'invention concerne un embrayage du type de celui faisant l'objet du brevet français FR-A-2 540 584 et son correspondant US-A-4 601 373.

Cet embrayage, qui est par exemple un embrayage multidisque, mais qui pourrait aussi être un embrayage double ou multiple, comporte, globalement, un plateau de réaction, un couvercle solidaire en rotation de ce plateau de réaction, et, échelonnés axialement entre le plateau de réaction et le fond du couvercle, en étant montés mobiles axialement par rapport à ceux-ci, d'une part, au moins deux disques de friction, et, d'autre part, en nombre égal aux disques de friction, au moins deux plateaux de pression, qui alternent avec les disques de friction, et dont un, au moins, dit plateau de pression intermédiaire, intervient ainsi entre deux disques de friction, avec des moyens élastiques d'engagement qui, à l'engagement, sollicitent les plateaux de pression en direction du plateau de réaction en prenant appui sur le fond du couvercle.

Préférentiellement, sont en outre prévus des moyens élastiques de rappel axial qui, au dégagement, sollicitent individuellement les plateaux de pression en direction opposée au plateau de réaction pour la libération des disques de friction.

Mais, au dégagement, il peut arriver qu'un disque de friction reste intempestivement serré entre deux plateaux de pression, au risque d'une usure prématurée de ses garnitures de frottement.

Pour éviter cet inconvénient, il est prévu, dans le brevet français mentionné ci-dessus, au moins un limiteur de course, appelé ici régulateur de course, qui, associé au plateau de pression intermédiaire, en contrôle la levée au dégagement.

Ce régulateur de course comporte, pour l'essentiel, une douille, qui, allongée axialement, est portée par une oreille radiale du plateau de pression intermédiaire, et une colonnette qui, engagée à frottement dans cette douille, est apte à être calée axialement sur le plateau de réaction.

Plus précisément, cette colonnette vient en butée axiale contre le couvercle au dégagement, ce qui limite en conséquence la levée du plateau de pression intermédiaire, et, à l'engagement, elle vient en butée axiale contre le plateau de réaction, en étant alors refoulée axialement dans la douille qui la porte au fur et à mesure de l'usure des garnitures dé frottement des disques de friction, ce qui permet avantageusement de tenir compte de cette usure.

Ce régulateur de course donne donc globalement satisfaction.

Mais il nécessite, pour sa réalisation, un nombre de pièces relativement élevé, et il impose de disposer d'une plage d'appui pour la colonnette sur le couvercle.

L'invention a pour objet un embrayage dans lequel ce régulateur de course est simplifié.

Il est tiré parti pour ce faire du fait que, pour d'autres raisons, et dans les limites d'un débattement déterminé par deux éléments de retenue axial, la douille portant la colonnette est elle-même montée mobile axialement dans l'oreille radiale du plateau de pression intermédiaire qui la porte.

L'embrayage suivant l'invention est du genre précédemment exposé, avec, associé à son plateau de pression intermédiaire, pour en contrôler la levée au dégagement, un régulateur de course comportant une douille, qui, dans les limites d'un débattement déterminé par deux éléments de retenue axiale, est montée mobile axialement dans une oreille radiale de ce plateau de pression intermédiaire, et une colonnette, qui, engagée à frottement dans cette douille, est apte à être calée axialement sur le plateau de réaction, et il est caractérisé en ce que la douille de ce régulateur de course porte et fournit un appui à des moyens élastiques de rappel qui, portant sur l'oreille radiale du plateau de pression intermédiaire, sollicitent en permanence le plateau de pression intermédiaire en direction opposée au plateau de réaction.

Ainsi, un nombre réduit de pièces suffit à la réalisation de ce régulateur de course, et il n'est nul besoin de prévoir sur le couvercle une quelconque plage d'appui pour sa colonnette.

En effet, au dégagement, le positionnement du plateau de pression intermédiaire résulte très simplement de son refoulement par les moyens élastiques de rappel que comporte suivant l'invention le régulateur de course associé, la douille de celui-ci offrant alors à ces moyens élastiques de rappel un appui axial contre le plateau de réaction à travers la colonnette qu'elle porte, et ce refoulement se trouvant par ailleurs stoppé par l'élément àe retenue axiale opposé de cette douille.

Il suffit donc, pour obtenir la levée souhaitée pour le plateau de pression intermédiaire, que le débattement axial de la douille du régulateur de course par rapport à l'oreille radiale de ce plateau de pression intermédiaire ait une amplitude suffisante.

Les moyens élastiques de rappel prévus suivant l'invention dans ce régulateur de course étant ainsi avantageusement à même d'assurer par eux-mêmes la levée du plateau de pression intermédiaire, il est possible, si désiré, de s'affranchir, pour ce plateau de pression intermédiaire, d'autres moyens élastiques de rappel axial, au bénéfice, encore, d'une simplification de l'ensemble. Il en résulte également que l'on peut réduire la longueur axiale de la colonette puisque celle-ci ne vient pas en butée contre le couvercle.

Les caractéristiques et avantages de l'invention ressortiront d'ailleurs de la description qui va suivre, à titre d'exemple, en référence aux dessins schématiques annexés sur lesquels :
la figure 1 est une vue en coupe axiale d'un embrayage suivant l'invention, pour la configuration d'engagement de cet embrayage, supposé à l'état neuf ;
la figure 2 est une vue partielle en élévation de cet embrayage, suivant la flèche II de la figure 1 ;
la figure 3 en est une vue partielle en coupe transversale, suivant la ligne III-III de la figure 1 ;
la figure 4 reprend, à échelle supérieure, le détail de la figure 1 repéré par un encart IV sur cette figure 1 ;
la figure 5 est une vue partielle en coupe axiale analogue à celle de la figure 4, pour la configuration de désengagement de l'embrayage ;
les figures 6 et 7 sont des vues partielles en coupe axiale, qui, analogues, chacune respectivement, à celles des figures 4 et 5, correspondent à un état usé de l'embrayage suivant l'invention.

Sur ces figures, on reconnaît un embrayage 10 du type de celui décrit dans le brevet français FR-A-2 540 584 mentionné ci-dessus.

cet embrayage 10 comporte, sous la forme de pièces globalement annulaires, un plateau de réaction 11, un couvercle 12 solidaire en rotation de ce plateau de réaction 11 et présentant, transversalement, un fond 13, et, périphériquement', une jupe 14 d'orientation générale axiale, et, échelonnés axialement entre le plateau de réaction 11 et le fond 13 du couvercle 12, en étant montés mobiles axialement par rapport à ceux-ci, d'une part, au moins deux disques de friction 15A, 15B, et, d'autre part, en nombre égal aux disques de friction 15A, 15B, au moins deux plateaux de pression 16A, 16B, qui alternent avec les disques de friction 15A, 15B, et dont un, au moins, dit plateau de pression intermédiaire, intervient ainsi entre deux disques de friction 15A, 15B.

Il s'agit, en l'espèce, du plateau de pression 16A, qui est celui le plus éloigné du fond 13 du couvercle 12.

Le plateau de réaction 11 est destiné à être calé en rotation sur un premier arbre, en pratique un arbre menant, et, s'agissant, ici, d'un embrayage 10 multidisque, les disques de friction 15A, 15B sont destinés à être calés en rotation conjointement sur un deuxième arbre, en l'espèce un arbre mené. Plus précisément chaque disque de friction 15A, 15B présente, de manière connue, à sa périphérie externe deux garnitures de frottement disposées de part et d'autre d'un support accouplé ici de manière élastique à un moyeu cannelé intérieurement pour liaison en rotation des disques de friction 15A, 15B avec l'arbre mené. Par simplicité, toutes ces pièces n'ont pas été référencées. On notera que les garniture de frottement sont solidaires du support élastique axialement et non plat à l'état libre, ce support présentant pour ce faire des pales radiales en sorte que l'épaisseur du support équipé de ses garnitures de frottement est plus important à l'état libre.

Les disques de friction 15A, 15B, sont ici du type progressif. Par simplicité, il sera fait ici abstraction de cette progressivité.

Ici, le couvercle 12 est creux et il est en appui contre le plateau de réaction 11 par la tranche de sa jupe 14, et, au raccordement de celle-ci avec son fond 13, il comporte, circulairement, de place en place, des perçages 18 pour le passage de vis, non représentées, propres à sa fixation à ce plateau de réaction 11.

Les plateaux de pression 16A, 16B sont l'un et l'autre calés en rotation sur le couvercle 12.

Ici, le plateau de pression 16B, qui est celui le plus proche du fond 13 du couvercle 12, est attelé, pour ce faire, à ce couvercle 12 par des languettes 19 axialement élastiques, qui, disposées sensiblement tangentiellement par rapport à une même circonférence de l'ensemble, sont fixées, à l'une de leurs extrémités, à ce plateau de pression 16B, et, à l'autre de leurs extrémités, au couvercle 12, les fixations correspondantes se faisant par exemple par des vis ou des rivets, et qui, conjointement, constituent, pour le plateau de pression 16B, des moyens élastiques de rappel axial sollicitant en permanence ce plateau de pression 16B en direction opposée au plateau de réaction 11.

Sous réserve de ce qui suit, des languettes de même type, non visibles sur les figures, peuvent être mises en oeuvre entre le plateau de pression intermédiaire 16A et le couvercle 12.

L'embrayage 10 comporte, également, des moyens élastiques d'engagement 20, qui, à l'engagement, sollicitent les plateaux de pression 16A, 16B en direction du plateau de réaction 11 en prenant appui sur le fond 13 du couvercle 12.

Ici, ces moyens élastiques d'engagement 20 sont constitués par un diaphragme présentant, d'une part, une partie périphérique 21, formant rondelle Belleville, par laquelle il prend appui sur le fond 13 du couvercle 12 et porte sur le plateau de pression 16B, celui-ci présentant axialement en saillie de place en place à cet effet des bossages 22, et, d'autre part, une partie centrale 23 fragmentée en doigts radiaux 24 sur lesquels est susceptible d'agir en dégagement une butée de débrayage 25.

S'agissant, ici, d'un embrayage 10 de type tiré, les moyens élastiques d'engagement 20 prennent appui sur le fond 13 du couvercle 12 suivant une circonférence de diamètre supérieur à celui de la circonférence suivant laquelle ils portent sur le plateau de pression 16B.

Les dispositions qui précèdent sont bien connues par elles-mêmes, et, ne relevant pas de la présente invention, elles ne seront pas décrites plus en détail ici.

Il suffit, d'ailleurs, à leur sujet, de se reporter au brevet français FR-A-2 540 584.

De manière également connue, l'embrayage 10 comporte, enfin, au moins un régulateur de course 26, qui, associé au plateau de pression intermédiaire 16A, en contrôle la levée au dégagement.

Préférentiellement, plusieurs régulateurs de course 26 sont prévus, en étant répartis circulairement autour de l'axe de l'ensemble.

Seul l'un d'eux est visible sur les figures.

Ce régulateur 26 intervient à là faveur d'une oreille radiale 27 du plateau de pression intermédiaire 16A, la jupe 14 du couvercle 12 comportant localement une échancrure pour le passage de celle-ci. Le régulateur 26 est d'orientation axiale.

Il comporte, d'une part, une douille 28, qui, dans les limites d'un débattement D déterminé par deux éléments de retenue axiale 30, 31, est montée mobile axialement dans l'oreille radiale 27 du plateau de pression intermédiaire 16A, à la faveur du perçage 32 de cette oreille radiale 27, et, d'autre part, une colonnette 33, qui, engagée à frottement dans la douille 28, est apte à être calée axialement sur le plateau de réaction 11. Les éléments 30, 31 sont solidaires de la douille 28 d'orientation axiale.

Ici, pour des raisons, notamment, de commodité de montage, la douille 28 dispose également d'un jeu radial J dans le perçage 32 de l'oreille radiale 27 qui la porte. Cette douille 27 s'étend à la périphérie externe du plateau de pression 16A en sorte que les régulateur 26 s'étendent radialement au-dessus des garnitures de frottement des disques de friction 15A, 15B.

Suivant l'invention, la douille 28 du régulateur de course 26 porte et fournit un appui à des moyens élastiques de rappel 34 qui, portant sur l'oreille radiale 27 du plateau de pression intermédiaire 16A, sollicitent en permanence ledit plateau de pression intermédiaire 16A en direction opposée au plateau de réaction 11.

Ici, ces moyens élastiques de rappel 34, portées par la douille 28, interviennent entre l'oreille radiale 27 du plateau de pression intermédiaire 16A et un premier des éléments de retenue axiale 30, 31 qui, solidaire axialement de la douille 28 du régulateur de course 26, s'étend entre cette oreille radiale 27 et le plateau de réaction 11.

Ici, cet élément de retenue axiale 30 est formé par un épaulement transversal de la douille 28, celle-ci comportant, d'un seul tenant, du côté du plateau de réaction il, une collerette 35.

Ici, les moyens élastiques de rappel 34 prévus suivant l'invention, comportent au moins un élément élastique 36, qui, coaxial de la douille 28 du régulateur de course 26, est engagé sur celle-ci. Ici, l'élément 36 consiste en une rondelle élastique 36 de faible encombrement axial.

Par exemple, et tel que représenté, seule une rondelle élastique 36 est prévue.

Ici, il s'agit d'une rondelle Belleville d'encombrement axial réduit.

Quoi qu'il en soit, les moyens élastiques de rappel 34 prévus suivant l'invention sont tarés de manière à ce que l'effort axial dont ils sont capables soit inférieur à l'effort de frottement intervenant entre la colonnette 33 et la douille 28. Elle est élastiquement déformable radialement.

Ici, la colonnette 33 du régulateur de course 26 est une goupille élastique fendue, du type de celles vendues sous la désignation commerciale déposée "MECANINDUS", et sa fente s'étend suivant une génératrice.

Cette colonnette 33, élastiquement déformable radialement, est engagée sous contrainte dans l'alésage axial 37 de la douille 28.

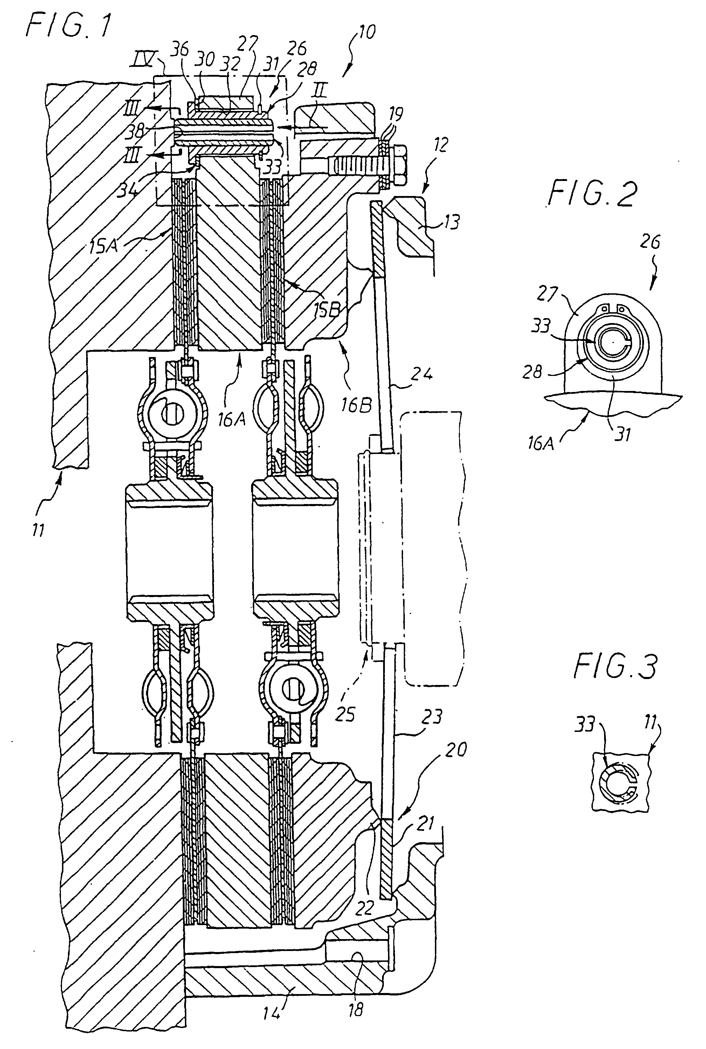

Autrement dit, et tel que schématisé en traits interrompus sur la figure 3, elle a, au repos, une configuration plus ouverte que celle qui est la sienne en place dans la douille 28.

Pour l'appui axial de la colonnette 33, le plateau de réaction 11 présente, transversalement, une portée 38.

Ici, cette portée 38 est formée à la surface d'un bossage 39 qui fait saillie localement sur le plateau de réaction 11.

Corollairement, le couvercle 12 est dépourvu de toute portée pour la colonnette 33.

Ici, le second élément de retenue axiale 31 de la douille 28 est, lui aussi, solidaire axialement de cette douille 28, et il s'agit d'un anneau élastique fendu qui, en prise avec une gorge 40 de cette douille 28, fait saillie radialement à la surface de celle-ci.

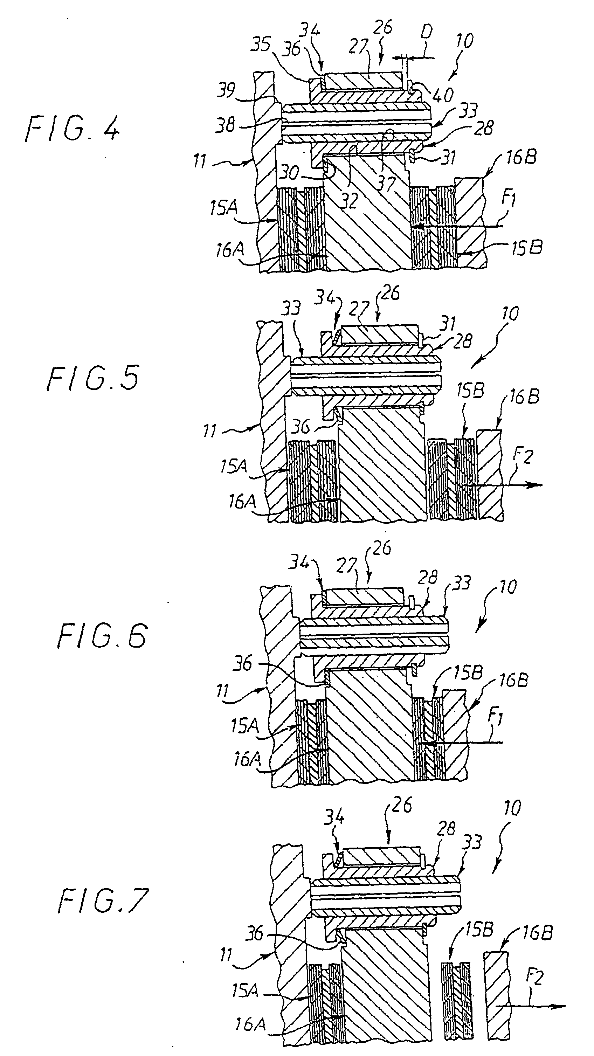

Pour la configuration d'engagement représentée sur la figure 4, le plateau de pression 16B presse, contre le plateau de réaction 11, sous la sollicitation des moyens élastiques d'engagement 20, et tel que schématisé par la flèche F1 sur cette figure 4, l'empilage constitué par le disque de friction 15A, le plateau de pression intermédiaire 16A, et le disque de friction 15B.

Conjointement, la rondelle élastique 36 constituant les moyens élastiques de rappel 34 prévus suivant l'invention est écrasée, ce qui dégage, en totalité, du côté opposé de la douille 28 du régulateur de course 26, entre l'oreille radiale 27 du plateau de pression intermédiaire 16A et l'élément de retenue axiale 31, le débattement D laissé libre à cette douille 28.

Au dégagement, figure 5, le plateau de pression 16B, relâché par les moyens élastiques d'engagement 20 sous la commande de la butée de débrayage 25 agissant en tirant sur l'extrémité interne des doigts 24, libère, sous la sollicitation des languettes 19 constituant ses moyens élastiques de rappel axial, l'empilage formé par le disque de friction 15A, le plateau de pression intermédiaire 16A et le disque de friction 15B, suivant la flèche F2 de la figure 5.

Ainsi relâchée, la rondelle élastique 36 constituant les moyens élastiques de rappel 34 prévus suivant l'invention refoule alors le plateau de pression intermédiaire 16A en direction opposée au plateau de réaction 11, par appui sur ce dernier à travers successivement la douille 28 du régulateur de course 26 et sa colonnette 33, jusqu'à ce que le plateau de pression intermédiaire 16A vienne en appui contre le second élément de retenue axiale 31 opposé à ce plateau de réaction 11.

Reporté du côté du plateau de réaction il, le débattement D correspondant assure en toute certitude la libération du disque de friction 15A, en se répartissant par exemple pour moitié de part et d'autre de celui-ci.

Par construction, il est fait en sorte que, eu égard à la position du plateau de pression 16B, le disque de friction 15B se trouve lui-même en toute certitude libéré. Tout ceci dépend des applications et de l'élasticité axiale des supports des disques de frictions 15A, 15B. Bien entendu, ces supports peuvent être, en variante, plats.

Si, en cours de service, les garnitures de frottement des disques de friction 15A, 15B sont l'objet d'une usure, ce qui conduit leur épaisseur à diminuer, figure 6, la douille 28, sous la sollicitation du plateau de pression 16B, est contrainte à coulisser sur la colonnette 33 en direction du plateau de réaction 11, et elle se rapproche de celui-ci, au fur et à mesure de cette usure.

Mais, à chaque fois, le débattement D de la douille 28 par rapport à l'oreille radiale 27 du plateau de pression intermédiaire 16A permet, au dégagement, et suivant le même processus que précédemment, la libération du disque de friction 15A, figure 7.

Il résulte de ce qui précède que les moyens élastiques de rappel 34 prévus suivant l'invention dans le régulateur de course 26 constituent par eux-mêmes les moyens élastiques de rappel axial du plateau de pression intermédiaire 16A.

Il suffit donc que ce plateau de pression intermédiaire 16A soit par ailleurs convenablement calé en rotation sur le couvercle 12.

Par exemple, il peut être prévu, à cet effet, entre ce plateau de pression intermédiaire 16A et le couvercle 12, un montage du type montage à tenons et mortaises permettant au plateau de pression intermédiaire 16A de coulisser axialement par rapport au couvercle 12.

Si, toutefois, des languettes sont mises en oeuvre pour ce plateau de pression intermédiaire 16A, comme pour le plateau de pression 16B, il est fait en sorte que ces languettes permettent aux moyens élastiques de rappel 34 de développer convenablement leurs effets. Un tel montage à languettes est décrit par exemple dans le document US-A- 4 640 400, le plateau de pression intermédiaire présentant des oreilles supplémentaires pour la fixation des languettes.

Ainsi qu'on le notera, la colonnette 33 du régulateur de course 26 suivant l'invention reste en permanence calée axialement sur le plateau de réaction 11 lorsque l'embrayage est engagé.

On ne sortirait donc pas du cadre de l'invention en la rendant solidaire axialement de ce plateau de réaction 11.

Mais, tel que représenté, sa réalisation sous forme de goupille élastique fendue indépendante du plateau de réaction 11 est particulièrement simple et économique. En effet, par rapport aux solutions décrites dans le document US-A-5 123 512, le plateau de réaction à une forme simple car le régulateur 26, selon l'invention est porté par l'oreille 27. Par rapport à ce document, la colonnette est de forme simple et économique et la régulation comporte un nombre réduit de pièces.

Par rapport aux solutions décrites dans le document US-A-4 640 400, il n'est pas besoin de prévoir un anneau intermédiaire offrant un appui à une tête épaulée que présente la colonnette et les moyens élastiques de rappel ne s'appuient pas sur l'anneau intermédiaire ou le plateau de réactions. L'embrayage selon l'invention peut être pourvu d'un anneau intermédiaire comme dans le document mais cet anneau serait alors de forme plus simple.

La présente invention ne se limite de toute façon pas à la forme de réalisation décrite et représentée, mais englobe toute variante d'exécution. En particulier, les moyens élastiques d'engagement peuvent comporter un rondelle d'assistance montée en série ou en parallèle avec le diaphragme. L'embrayage peut être du type poussé. Dans ce cas, la butée de débrayage agit en poussant sur l'extrémité des doigts du diaphragme et les élastiques d'engagement prennent appui sur les appuis portés par le fond 13 du couvercle suivant une circonférence de diamètre inférieur à celui de la circonférence suivant laquelle ils portent sur le plateau de pression 16B.

On peut utiliser un ressort à boudin comme moyens élastiques de rappel. En variante, on peut utiliser un ressort axialement ondulé.

Ces moyens élastiques sont engagés dans tous les cas sur la douille 28 et entourent celle-ci. Ils sont imperdables, et, du fait qu'ils sont portés par le régulateur lui-même, porté par le plateau de pression intermédiaire en combinaison avec les éléments de retenue 30, 31.

## Revendications

1. Embrayage du genre comportant un plateau de réaction (11), un couvercle (12) solidaire en rotation de ce plateau de réaction (11), et, échelonnés axialement entre le plateau de réaction (11) et le fond (13) du couvercle (12), en étant montés mobiles axialement par rapport à ceux-ci, d'une part, au moins deux disques de friction (15A, 15B) ,et, d'autre part, en nombre égal aux disques de friction (15A, 15B) , au moins deux plateaux de pression (16A, 16B) , qui alternent avec les disques de friction (15A, 15B), et dont un, au moins, dit plateau de pression intermédiaire, intervient ainsi entre deux disques de friction (15A, 15B) , avec des moyens élastiques d'engagement (20) qui, à l'engagement, sollicitent les plateaux de pression (16A, 16B) en direction du plateau de réaction (11) en prenant appui sur le fond (13) du couvercle (12), et au moins un régulateur de course (26), qui, associé au plateau de pression intermédiaire (16A), en contrôle la levée au dégagement, ce régulateur de course (26) comportant une douille (28), qui, dans les limites d'un débattement (D) déterminé par deux éléments de retenue axiale (30, 31), est montée mobile axialement dans une oreille radiale (27) du plateau de pression intermédiaire (16A) , et une colonnette (33) qui, engagée a frottement dans la douille (28), est apte à être calée axialement sur le plateau de réaction (11), **caractérisé en ce que** la douille (28) du régulateur de course (26) porte et fournit un appui à des moyens élastiques de rappel (34) qui, portant sur l'oreille radiale (27) du plateau de pression intermédiaire (16A) ,sollicitent en permanence ledit plateau de pression intermédiaire (16A) en direction opposée au plateau de réaction (11).

2. Embrayage suivant la revendication 1, **caractérisé en ce que** les moyens élastiques de rappel (34) interviennent entre l'oreille radiale (27) du plateau de pression intermédiaire (16A) et un élément de retenue axiale (30) qui, solidaire axialement de la douille (28) du régulateur de course (26), s'étend entre cette oreille radiale (27) et le plateau de réaction (11).

3. Embrayage suivant la revendication 2, **caractérisé en ce que** l'élément de retenue axiale (30) solidaire axialement de la douille (28) du régulateur de course (26) est formé par un épaulement transversal de cette douille (28).

4. Embrayage suivant la revendication 3, **caractérisé en ce que** les moyens élastiques de rappel (34) comportent au moins une rondelle élastique (36) qui, coaxiale de la douille (28) du régulateur de course (26), est engagée sur cette douille (28).

5. Embrayage suivant la revendication 4, **caractérisé en ce que** la rondelle élastique (36) est une rondelle Belleville.

6. Embrayage suivant la revendication 1, **caractérisé en ce que** les moyens élastiques de rappel (34) sont tarés de manière à ce que l'effort axial dont ils sont capables soit inférieur à l'effort de frottement intervenant entre la colonnette (33) du régulateur de course (26) et la douille (28) de celui-ci.

7. Embrayage suivant la revendication 1, **caractérisé en ce que** la colonnette (33) du régulateur de course (26) est une goupille élastique fendue.

8. Embrayage suivant la revendication 1, **caractérisé en ce que** le couvercle (12) est dépourvu de toute portée pour la colonnette (33) du régulateur de course (26).

## Patentansprüche

1. Kupplung, umfassend eine Gegenanpreßplatte (11), einen drehfest mit dieser Gegenanpreßplatte (11) verbundenen Kupplungsdeckel (12), und, axial gestaffelt zwischen der Gegenanpreßplatte (11) und dem Boden (13) des Kupplungsdeckels (12) und im Verhältnis zu diesen axial beweglich gelagert, einerseits mindestens zwei Kupplungsscheiben (15A, 15B) und andererseits, in gleicher Anzahl wie die Kupplungsscheiben (15A, 15B), mindestens zwei Druckplatten (16A, 16B), die sich mit den Kupplungsscheiben (15A, 15B) abwechseln und von denen mindestens eine, die als Zwischendruckplatte bezeichnet wird, dabei zwischen zwei Kupplungsscheiben (15A, 15B) wirksam wird, mit elastischen Einrückmitteln (20), die beim Einrücken die Druckplatten (16A, 16B) in Richtung der Gegenanpreßplatte (11) beaufschlagen, wobei sie auf dem Boden (13) des Kupplungsdeckels (12) zur Auflage kommen, und mindestens einen Hubregler (26), der mit der Zwischendruckplatte (16A) verbunden ist und deren Abheben beim Ausrücken kontrolliert, wobei dieser Hubregler (26) eine Hülse (28), die innerhalb der Grenzen eines durch zwei axiale Halteelemente (30, 31) bestimmten Bewegungsraums (D) axial beweglich in einer radialen Nase (27) der Zwischendruckplatte (16A) gelagert ist, und einen Distanzbolzen (33) umfaßt, der reibschlüssig in die Hülse (28) eingesetzt ist und axial an der Gegenanpreßplatte (11) gesichert werden kann,
**dadurch gekennzeichnet,**
**daß** die Hülse (28) des Hubreglers (26) eine Auflage für elastische Rückstellmittel (34) trägt und bereitstellt, die, auf der radialen Nase (27) der Zwischendruckplatte (16A) aufliegend, die genannte Zwischendruckplatte (16A) ständig in der zur Gegenanpreßplatte (11) entgegengesetzten Richtung beaufschlagen.

2. Kupplung nach Anspruch 1, **dadurch gekennzeichnet, daß** die elastischen Rückstellmittel (34) zwischen der radialen Nase (27) der Zwischendruckplatte (16A) und einem axialen Halteelement (30) wirksam werden, das axial fest mit der Hülse (28) des Hubreglers (26) verbunden ist und sich zwischen dieser radialen Nase (27) und der Gegenanpreßplatte (11) erstreckt.

3. Kupplung nach Anspruch 2, **dadurch gekennzeichnet, daß** das axial fest mit der Hülse (28) des Hubreglers (26) verbundene axiale Halteelement (30) durch eine Querschulter dieser Hülse (28) gebildet wird.

4. Kupplung nach Anspruch 3, **dadurch gekennzeichnet, daß** die elastischen Rückstellmittel (34) mindestens eine Federscheibe (36) umfassen, die koaxial zur Hülse (28) des Hubreglers (26) verläuft und an dieser Hülse (28) eingesetzt ist.

5. Kupplung nach Anspruch 4, **dadurch gekennzeichnet, daß** die Federscheibe (36) eine gewölbte Federscheibe (28) ist.

6. Kupplung nach Anspruch 1, **dadurch gekennzeichnet, daß** die elastischen Rückstellmittel (34) so eingestellt sind, daß die axiale Beanspruchung, die sie ausüben können, kleiner als die Reibbeanspruchung ist, die zwischen dem Distanzbolzen (33) des Hubreglers (26) und dessen Hülse (28) auftritt.

7. Kupplung nach Anspruch 1, **dadurch gekennzeichnet, daß** der Distanzbolzen (33) des Hubreglers (26) ein Kerbstift ist.

8. Kupplung nach Anspruch 1, **dadurch gekennzeichnet, daß** der Kupplungsdeckel (12) ohne jede Auflagefläche für den Distanzbolzen (33) des Hubreglers (26) ausgeführt ist.

## Claims

1. A clutch of the kind comprising a reaction plate (11), a cover plate (12) fixed in rotation to the reaction plate (11), and, spaced apart axially between the reaction plate (11) and the base portion (13) of the cover plate (12), and mounted for axial movement with respect to these latter, first at least two friction discs (15A, 153), and secondly, in a number equal to the number of friction discs (15A, 15B), at least two pressure plates (16A, 16B), which are arranged alternately with the friction discs (15A, 15B) and of which at least one, referred to as an intermediate pressure plate, thus acts between two friction discs (15A, 15B), with resilient engagement means (20) which, to effect engagement, urge the pressure plates (16A, 16B) towards the reaction plate (11) by bearing on the base portion (13) of the cover plate (120, and at least one course of travel regulator (26) which is associated with the intermediate pressure plate (16A) and controls its displacement to effect disengagement, the said course of travel regulator (26) comprising a sleeve (28) which, within the limits of a displacement (D) determined by two axial retaining elements (30, 31), is mounted for axial movement in a radial ear (27) of the intermediate pressure plate (16A), and a bar (33) which is frictionally engaged within the sleeve (28) and is adapted to be located axially on the reaction plate (11), **characterised in that** the sleeve (28) of the course of travel regulator (26) carries, and applies a force to, resilient return means (34) which, bearing on the radial ear (27) of the intermediate pressure plate (16A), permanently bias the said intermediate pressure plate (16A) away from the reaction plate (11).

2. A clutch according to Claim 1, **characterised in that** the resilient return means (34) act between the radial ear (27) of the intermediate pressure plate (16A) and an axial retaining element (30) which, being fixed axially to the sleeve (28) of the course of travel regulator (26), is disposed between the said radial ear (27) and the reaction plate (11).

3. A clutch according to Claim 2, **characterised in that** the axial retaining element (30) which is fixed axially to the sleeve (28) of the course of travel regulator (26) is defined by a transverse shoulder of the said sleeve (28).

4. A clutch according to Claim 3, **characterised in that** the resilient return means (34) comprise at least one resilient ring (36), which, being coaxial with the sleeve (28) of the course of travel regulator (26), is engaged on the said sleeve (28).

5. A clutch according to Claim 4, **characterised in that** the resilient ring (36) is a Belleville ring.

6. A clutch according to Claim 1, **characterised in that** the resilient return means (34) are so calibrated that the axial force of which they are capable is smaller than the friction force acting between the bar (33) of the course of travel regulator (26) and the sleeve (28) of the latter.

7. A clutch according to Claim 1, **characterised in that** the bar (33) of the course of travel regulator (26) is a slotted resilient dowel.

8. A clutch according to Claim 1, **characterised in that** the cover plate (12) has no surface for engagement by the bar (33) of the course of travel regulator (26).
